# DEMANDE DE BREVET EUROPEEN

(11) **EP 1 431 007 A1**
(43) Date de publication de la demande: **23.06.2004**
(21) Numéro de dépôt: 03293121.4
(22) Date de dépôt: 12.12.2003
(51) Int. Cl.: B25H 3/04, A47F 7/00, B62B 1/26

(54) **Système de maintien d'outils dans une position facilitant le rangement**

(30) Priorité: 20.12.2002 FR 0216734
(71) Demandeur: Oktes S.A.R.L., 22300 Lannion (FR)
(72) Inventeur: Le Roux, Benoît, 22300 Lannion (FR)
(74) Mandataire: Maillet, Alain

(57) **Abrégé**

La présente invention concerne un système de maintien (50) d'outils dans une position facilitant leur rangement.

Selon l'invention, le système de maintien (50) d'outils comporte, d'une part, au moins une gorge (511) dans le fond de laquelle le manche d'un outil (2) est maintenu par un moyen élastique (52) et, d'autre part, au moins un moyen pour amener ledit manche dans au moins une gorge (511) en passant du côté dudit moyen élastique où se trouve ladite gorge (511), ladite ou chaque gorge (511) et ledit ou chaque moyen pour amener ledit manche dans ladite gorge (511) étant recouverts sur leur contour intérieur d'un élément formant zone d'adhérence (514) prévu pour freiner le déplacement vertical du manche de l'outil (2).

## Description

La présente invention concerne un système de maintien d'outils permettant d'en faciliter le rangement, ainsi qu'un chariot porte-outil comportant un tel système. L'invention s'applique particulièrement aux outils de jardinage.

Dans la pratique du jardinage notamment, on utilise des outils qui comportent le plus souvent un long manche. C'est le cas par exemple de la bêche, de la griffe, de la binette, du sarcloir, de la serfouette, du balai à feuille, etc. Ces outils sont prévus pour travailler la terre sans avoir à se baisser et ainsi limiter la fatigue engendrée par ce travail.

Entre chaque utilisation, les outils sont entreposés dans un endroit choisi à cet effet. La présence du long manche est souvent une source de problème pour choisir le lieu et le sens de l'entrepôt des outils. En effet, les outils ne doivent pas gêner le passage et doivent éviter d'engendrer des accidents soit en tombant, soit en présentant des extrémités pointues, etc. En outre, le jardinier souhaite pouvoir à la fois les entreposer et les retirer facilement de l'endroit choisi.

Que les jardiniers soient des professionnels ou des particuliers, la solution adoptée pour le rangement est celle qui consiste à faire reposer les outils contre une paroi. Cette position, bien que remplissant en partie les souhaits du jardinier, ne satisfait pas aux exigences de sécurité des personnes. En effet, cette solution est dangereuse car les outils ainsi disposés risquent de tomber. En outre, cette position rend la prise des outils peu pratique, ceux-ci étant parfois entremêlés. Par ailleurs, cette solution oblige le jardinier à emporter un seul outil à la fois sous peine de se voir encombrer d'outils dont il ne sera quoi faire pendant son travail.

Le but de l'invention est donc de proposer un système de maintien d'outils permettant de résoudre les problèmes évoqués précédemment.

A cet effet, l'invention propose un système de maintien d'outils dans une position facilitant leur rangement. Le système selon l'invention se caractérise en ce qu'il comprend, d'une part, au moins une gorge dans le fond de laquelle le manche d'un outil est maintenu par un moyen élastique et, d'autre part, au moins un moyen pour amener ledit manche dans au moins une gorge en passant du côté dudit moyen élastique où se trouve ladite gorge, ladite ou chaque gorge et ledit ou chaque moyen pour amener ledit manche dans ladite gorge étant recouverts sur leur tranche d'un élément formant zone d'adhérence prévu pour empêcher le manche de l'outil de se déplacer verticalement.

Selon une autre caractéristique de l'invention, ledit moyen pour amener ledit manche dans ladite gorge est un canal d'entrée.

Selon une autre caractéristique de l'invention, ladite zone d'adhérence est une pièce en matière plastique.

Selon une autre caractéristique de l'invention, le système de maintien selon l'invention comporte plusieurs ensembles formés par ladite gorge et ledit canal d'entrée régulièrement répartis à sa périphérie.

Selon une autre caractéristique de l'invention, ledit moyen élastique est une bande de matière élastique.

Dans une variante de réalisation, ledit moyen élastique est un ressort.

L'invention concerne également un chariot porte-outil caractérisé en ce qu'il comporte un système de maintien d'outils tel que décrit précédemment.

Selon une autre caractéristique de l'invention, ledit chariot porte-outil comporte une structure adaptée à faire peser le poids du chariot sur l'axe de rotation des roues de façon à faciliter le maniement dudit chariot.

Selon une autre caractéristique de l'invention, ledit chariot porte-outil comporte deux systèmes de maintien d'outils montés l'un au-dessus de l'autre de manière à maintenir ledit outil en deux endroits distincts.

Les caractéristiques de l'invention mentionnée ci-dessus, ainsi que d'autres, apparaîtront plus clairement à la lecture de la description suivante d'exemples de réalisation, ladite description étant faite en relation avec les dessins joints, parmi lesquels:
La Fig. 1 représente une vue globale en perspective d'un chariot porte-outil comportant un système de maintien selon l'invention ;
La Fig. 2 représente une vue globale en perspective d'un chariot porte-outil comportant un système de maintien selon l'invention muni d'outils ; et
La Fig. 3 représente une vue de dessus d'un chariot porte-outil comportant un système de maintien selon l'invention muni d'outils.

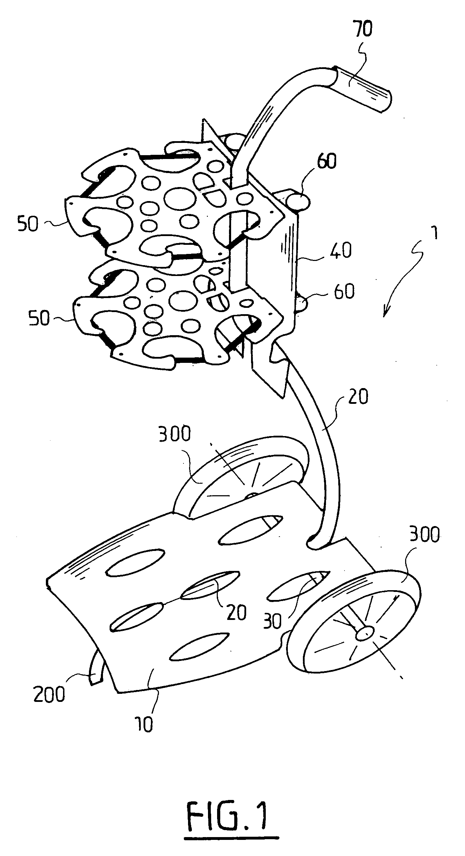

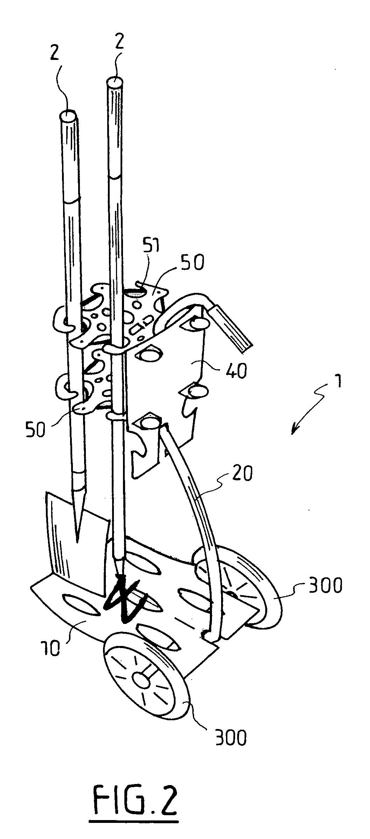

On a représenté aux Figs. 1 et 2 un chariot porte-outil 1 comportant un système de maintien d'outils 50 selon l'invention. Ce chariot 1 comporte un socle 10 monté sur un tube 20 pourvu à son extrémité la plus basse d'un pied 200 permettant de maintenir le socle 10 dans une position horizontale. Le socle 10 permet de faire éventuellement reposer la partie fonctionnelle de l'outil, comme par exemple une tête de griffe, tel que cela est représenté à la Fig. 2. Le tube 20 repose par ailleurs sur un axe 30 dont les extrémités sont pourvues de roues 300. Ces roues sont de préférence gonflables. La partie du tube 20 reposant sur l'axe 30 se poursuit verticalement jusqu'à une partie coudée sur laquelle est fixée une plaque 40. La partie coudée du tube 20 est prévue pour que lorsque le chariot est incliné par l'utilisateur, le poids du chariot et des outils qui sont placés dessus, soit reporté sur l'axe 30 des roues 300, ce qui rend le chariot 1 léger et maniable. La plaque 40 permet de maintenir à l'horizontale sur une première face, au moins un système de maintien 50 d'outils et sur une seconde face, des oeillets 60 participant également au maintien d'outils. Le tube 20 se prolonge légèrement au-dessus de la plaque 40 et se termine par une poignée 70. Les éléments formant le chariot à l'exception des roues sont avantageusement réalisés en acier inoxydable, mais peuvent également être réalisés dans d'autres matériaux adaptés ou comporter un aspect de surface peint, galvanisé, etc.

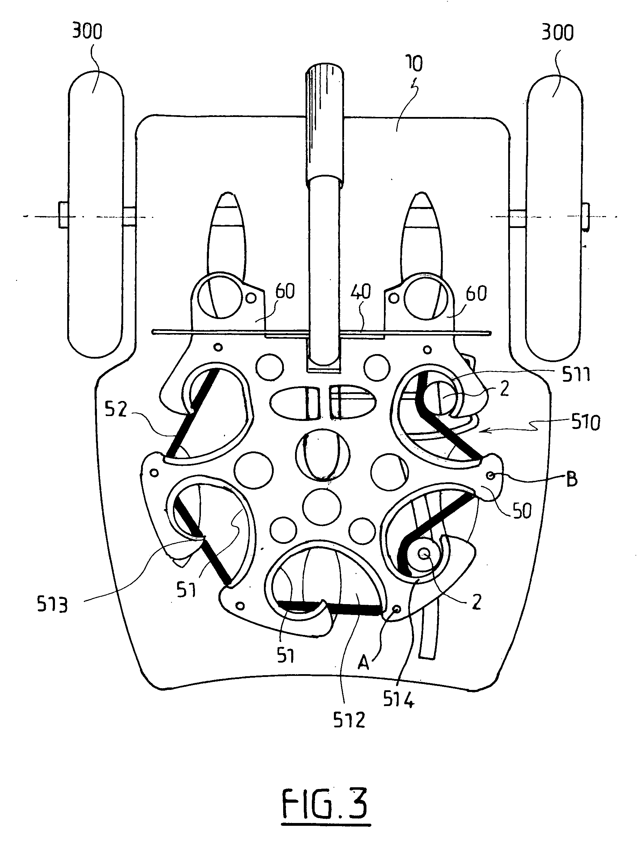

Le système de maintien 50 est avantageusement une plaque circulaire ou demi-circulaire destinée à maintenir le manche d'outils 2 de préférence dans une position verticale. Cette fonction de maintien est remplie par des encoches 51 décrites ci-après en rapport avec la Fig. 3.

Comme cela est représenté à la Fig. 3, un système de maintien 50 selon l'invention comporte plusieurs encoches 51 régulièrement réparties à la périphérie du système de maintien 50. Dans le mode de réalisation représenté, le système de maintien 50 comporte cinq encoches 51. Chaque encoche 51 se présente sous la forme d'un canal d'entrée 512, de préférence de forme coudée, terminé par une gorge 511. L'ouverture 510 du canal d'entrée 512 des encoches 51 est prévue pour permettre le passage sans difficulté du manche d'un outil 2. La forme de l'encoche 51 est telle que le manche de l'outil 2 qui est amené par le canal d'entrée 512 jusqu'à la gorge 511 de l'encoche 51 se trouve maintenu horizontalement dans cette gorge 511 par une butée 513. Néanmoins, l'encoche 51 étant prévue pour faciliter le passage du manche de l'outil 2, elle ne bloque pas totalement le manche de l'outil 2 dans cette position de maintien. C'est pourquoi chaque encoche 51 est en outre pourvue d'un moyen élastique 52, par exemple une bande de matière élastique, par exemple de type Sandow (Marque déposée) ou un ressort. Ce moyen élastique 52 est fixé, d'une part, en un premier point A à proximité de la gorge 511 de l'encoche 51 et, d'autre part, en un second point B à proximité de l'ouverture 510 du canal d'entrée 512. L'emplacement des points de fixation A, B du moyen élastique 52 et de la butée 513 est calculé de manière à exercer sur le manche de l'outil 2 une force telle qu'il a tendance à rester dans sa position de maintien dans la gorge 511 de l'encoche 51. A cet effet, le rapport de la distance entre les points de fixation A, B et la distance entre un point de fixation A ou B et la butée 513 est approximativement égal à 2. Le système de maintien 50 tel que décrit précédemment est de préférence réalisé en acier inoxydable, mais peut également être réalisé dans d'autres matériaux adaptés ou comporter un aspect de surface peint, galvanisé, etc. Afin d'améliorer sa fonction de maintien, le système de maintien 50 comporte avantageusement à l'intérieur de chaque encoche 51 une zone d'adhérence 514. Cette zone d'adhérence 514 est réalisée en matière plastique de préférence à l'aide d'une pièce rugueuse de section en U placée sur le contour intérieur de l'encoche de manière à la recouvrir à la manière d'un enrobage. Cette zone d'adhérence 514 est notamment prévue pour maintenir le manche de l'outil 2 de manière à freiner ses déplacements verticaux. En outre, la zone d'adhérence 514 permet d'éviter un frottement trop important du système de maintien 50 sur le manche de l'outil 2 pouvant l'user anormalement. Ainsi, à l'aide de la butée 513, du moyen élastique 52 et de la zone d'adhérence 514, le manche de l'outil 2 est maintenu sur tous ses degrés de liberté. Ainsi, l'outil 2 peut être maintenu à l'aide du système de maintien 50 selon l'invention dans une unique zone de son manche déterminée indépendamment de la longueur de ce manche. L'utilisateur de l'outil 2 peut donc choisir de ne pas faire reposer l'outil 2 sur le socle 10 du chariot. On remarquera par ailleurs que de manière générale, un utilisateur pouvant choisir de disposer la partie utile de l'outil 2 en direction opposée au socle 10, par exemple parce que le manche de l'outil 2 est trop court, choisira de préférence, grâce aux zones d'adhérence 514 de l'invention de placer cet outil 2 dans une position plus sécuritaire, la partie utile de l'outil 2 tournée vers le socle 10.

Ainsi, l'utilisateur d'un outil qui souhaite ranger un outil 2 sur le système de maintien 50 selon l'invention, présente le manche de l'outil 2 devant l'ouverture 510 d'une encoche 51, puis pousse le manche le long du canal d'entrée 512 jusqu'à l'amener dans la gorge 511 où il se trouve alors bloqué par le moyen élastique 52 contre la zone d'adhérence 514 de la butée 513. De manière préférentielle, il convient, pour assurer un maintien de qualité des outils, d'avoir deux systèmes de maintien orientés de la même manière soit comme c'est le cas sur le chariot, soit sur une paroi telle qu'un mur ou une paroi de véhicule du type pick-up. Le mouvement du manche de l'outil 2 au travers des systèmes de maintien est donc un mouvement horizontal simple.

A l'inverse, le retrait de l'outil 2 du système de maintien 50 implique de repousser le moyen élastique 52 à l'aide du manche de l'outil 2, afin de dégager l'outil 2 de son emprise et de permettre au manche de passer la butée 513, pour pouvoir le retirer par la suite en passant par le canal d'entrée 512. Lorsque deux systèmes de maintien 50 sont utilisés, le retrait d'un outil se fait sans difficultés d'une manière approchant l'horizontale.

## Revendications

1. Système de maintien (50) d'outils dans une position facilitant leur rangement, **caractérisé en ce qu'**il comprend, d'une part, au moins une gorge (511) dans le fond de laquelle le manche d'un outil (2) est maintenu par un moyen élastique (52) et, d'autre part, au moins un moyen pour amener ledit manche dans au moins une gorge (511) en passant du côté dudit moyen élastique où se trouve ladite gorge (511), ladite ou chaque gorge (511) et ledit ou chaque moyen pour amener ledit manche dans ladite gorge (511) étant recouverts sur leur contour intérieur d'un élément formant zone d'adhérence (514) prévu pour freiner le déplacement vertical du manche de l'outil (2).

2. Système de maintien (50) selon la revendication 1, **caractérisé en ce que** ledit moyen pour amener ledit manche dans ladite gorge (511) est un canal d'entrée (512).

3. Système de maintien (50) selon la revendication 1 ou 2, **caractérisé en ce que** ladite zone d'adhérence (514) est une pièce en matière plastique.

4. Système de maintien (50) selon la revendication 2 ou 3, **caractérisé en ce qu'**il comporte plusieurs ensembles formés par ladite gorge (511) et ledit canal d'entrée (512) régulièrement répartis à sa périphérie.

5. Système de maintien (50) selon l'une des revendications précédentes, **caractérisé en ce que** ledit moyen élastique (52) est une bande de matière élastique.

6. Système de maintien (50) selon l'une quelconque des revendications 1 à 4, **caractérisé en ce que** ledit moyen élastique (52) est un ressort.

7. Chariot porte-outil (1), **caractérisé en ce qu'**il comporte un système de maintien d'outils selon l'une quelconque des revendications précédentes.

8. Chariot porte-outil (1) selon la revendication 7, **caractérisé en ce qu'**il comporte une structure adaptée à faire peser le poids du chariot sur l'axe de rotation des roues de façon à faciliter le maniement dudit chariot (1).

9. Chariot porte-outil (1) selon la revendication 7 ou 8, **caractérisé en ce qu'**il comporte deux systèmes de maintien d'outils (50) montés l'un au-dessus de l'autre de manière à maintenir ledit outil (2) en deux endroits distincts.
